# EUROPEAN PATENT APPLICATION

(11) **EP 1 199 906 A1**
(43) Date of publication of application: **24.04.2002**
(21) Application number: 00979943.8
(22) Date of filing: 06.12.2000
(51) Int. Cl.: H04R 1/02, H04R 17/00, G01S 7/521

(54) **AERIAL ULTRASONIC SENSOR**

(30) Priority: 21.07.2000 JP 2000221285
(71) Applicant: UMCA CORPORATION, Ohta-ku, Tokyo 144-0047 (JP)
(72) Inventor: TAKIGUCHI, Isao UMCA Corporation, Ohta-ku, Tokyo 144-0047 (JP)
(74) Representative: Brunner, Michael John
(86) International application number: JP0008625
(87) International publication number: WO0209471

(57) **Abstract**

To provide an aerial ultrasonic sensor that can be used outdoors and that can be designed more freely. The aerial ultrasonic sensor includes: a cylindrical outer case 10 an end of which is not closed but constitutes a sound emitting port 10a; a vibrating section 23 arranged in the outer case 10 and including a piezoelectric ceramic 14; and a draining through-hole 10c formed in a side wall of the outer case 10. When the sensor is used outdoors so that the through-hole 10c faces downward, rainwater infiltrating into the outer case 10 flows out from the through-hole 10c, and is prevented from staying in the outer case 10 and thus from affecting the vibrating section 23.

## Description

### TECHNICAL FIELD

The present invention relates to an aerial ultrasonic sensor for radiating ultrasonic waves through the air and/or receiving ultrasonic waves through the air, and in particular, to an aerial ultrasonic sensor suitable for outdoor use.

### BACKGROUND ART

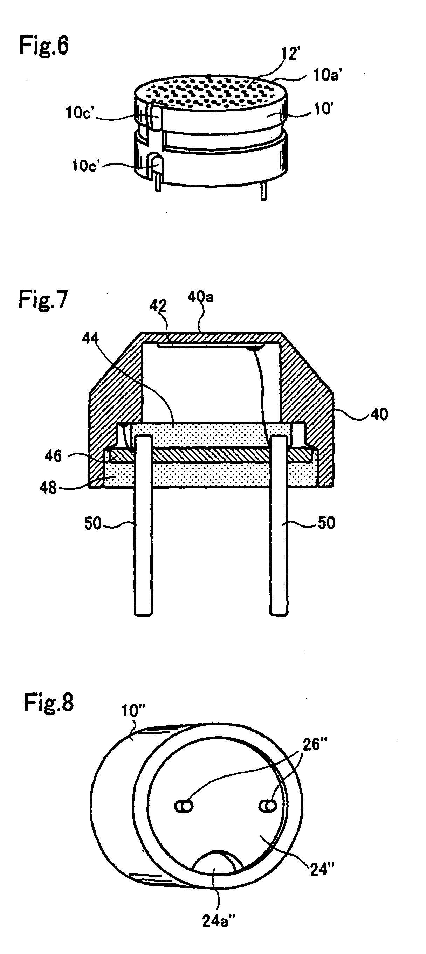

Drip-proof aerial ultrasonic sensors, such as the one shown in Figure 7, are known as aerial ultrasonic sensors suitable for outdoor use. These drip-proof aerial ultrasonic sensors are composed of a cylindrical outer case 40 one end of which is closed and which also acts as a diaphragm 40a, a piezoelectric ceramic 42 that is a vibrator mounted on a back surface of the diaphragm 40a of the outer case 40, and a sound absorbing material 44 and a base 46 both arranged at an end of the outer case 40 opposite to the diaphragm 40a, the opposite end being sealed by a seal material 48.

Further, a pair of electrode leads 50, 50 penetrating the seal material 48 are fixed to the base 46. One of the electrode leads 50 is connected to a back surface of the piezoelectric ceramic 42, whereas the other 50 is connected to the diaphragm 40a.

This type of aerial ultrasonic sensor has a closed structure including the outer case 40 one end of which is closed and the seal material 48, thus preventing the penetration of rain or dust.

On the other hand, as aerial ultrasonic sensors suitable principally for outdoor use, open type aerial ultrasonic sensors are known which use a cylindrical case one end of which is not closed but constitutes a sound emitting port. The sound emitting port in the case is normally fitted with a mesh-shaped window, and the case has a piezoelectric ceramic arranged therein as a vibrator.

In the case of the drip-proof type aerial ultrasonic sensor shown in Figure 7, the structure of the vibrating section composed of the diaphragm 40a and the vibrator 42 is restricted, thus preventing the sensor from being designed freely. Accordingly, only sensors having a narrow-band and high-Q characteristic can be manufactured, and those having a broad-band characteristic or having a double-peak characteristic for operation with two frequencies cannot be manufactured with a high yield. Moreover, since the outer surface of this type of sensor constitutes the diaphragm 40a, waterdrops may adhere to the diaphragm 40a and act as a direct load thereon, thereby degrading the performance of the sensor. As a result, the sensor cannot be used before the waterdrops dry.

On the other hand, in the case of the open type aerial ultrasonic sensor, sensors allowing their frequency characteristics to be designed more freely can be manufactured, and such sensors can be used even if waterdrops adhere to the mesh-type window in contrast to the drip-proof aerial ultrasonic sensors. Rainwater, however, may infiltrate through the mesh-type window, so that water may collect to directly press the vibrating section. Thus, the open type aerial ultrasonic sensor is disadvantageously unsuitable for outdoor use.

The present invention is achieved to solve these problems, and it is an object of the present invention to provide an aerial ultrasonic sensor that can be used outdoors and that allows the frequency characteristics or the like to be designed freely.

Additionally, another object of the present invention is to provide an aerial ultrasonic sensor that is unlikely to be affected by adhering waterdrops.

### DISCLOSURE OF THE INVENTION

To attain the above objects, the aspect of the present invention as set forth in claim 1 provides an aerial ultrasonic sensor comprising: a cylindrical outer case one end of which is not closed but constitutes a sound emitting port; a bottom portion formed opposite to the one end of the outer case; and a vibrating section arranged in the outer case and including a vibrator, in which the sensor radiates ultrasonic waves from the sound emitting port through the air and/or receives ultrasonic waves through the air, characterized in that a draining through-hole is formed in a side surface of the outer case and/or the bottom portion.

Further, the aspect of the present invention as set forth in claim 2 provides the aerial ultrasonic sensor according to claim 1, characterized in that the sound emitting port of the outer case is porous.

When the sensor is used outdoors so that its through-hole faces downward, rainwater infiltrating into the outer case flows out from the through-hole and is prevented from staying in the outer case. Even if the vibrator wets, the vibrator dries quickly and can then be used as it was before the wetting. The outer case and bottom portion encompassing the vibrating section of the aerial ultrasonic sensor including the vibrator have been generally considered to be components for effectively radiating ultrasonic waves frontward. Therefore, a drilling of a through-hole, which may lead to the leakage of ultrasonic waves, has been expected to degrade the performance of the sensor, so that the drilling such a through-hole in the outer case or the bottom portion has been avoided. The results of the inventor's experiments, however, show that the through-hole in the side surface or bottom portion of the outer case does not substantially affect the performance of the sensor. Thus, the sensor can be used outdoors by using the through-hole formed in the side surface or bottom portion of the outer case, for drainage.

Since the vibrating section including the vibrator is arranged inside the outer case, the frequency characteristics or the like can be designed more freely irrespective of the shape of the outer case.

If the sound emitting port of the outer case is porous, waterdrops may adhere to the porous portion. Since, however, the waterdrops are restrained from coming into direct contact with the vibrating section including the vibrator, the sensor can be used as it is without being affected by the adhering waterdrops.

### BRIEF DESCRIPTION OF THE DRAWINGS

Figure 1 is a perspective view representing one embodiment of an aerial ultrasonic sensor according to the present invention;
Figure 2 is a semi-sectional view representing an internal structure of the aerial ultrasonic sensor of the present invention;
Figure 3 is a view representing an operation of the aerial ultrasonic sensor of Figure 1;
Figure 4 is a set of charts showing results of measurements of a frequency characteristic of a sound pressure;
Figure 5 is a set of charts showing results of measurements of a frequency characteristic of the sensitivity;
Figure 6 is a perspective view of another embodiment of the aerial ultrasonic sensor of the present invention;
Figure 7 is a sectional view of a conventional aerial ultrasonic sensor;
Figure 8 is a perspective view of another embodiment of the aerial ultrasonic sensor of the present invention;
Figure 9 is a set of charts showing results of measurements of a frequency characteristic of the sound pressure; and
Figure 10 is a set of charts showing results of measurements of a frequency characteristic of the sensitivity.

### BEST MODE FOR CARRYING OUT THE INVENTION

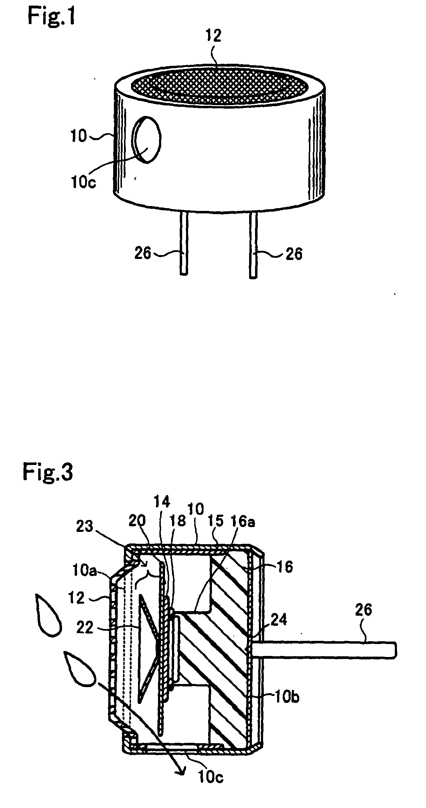

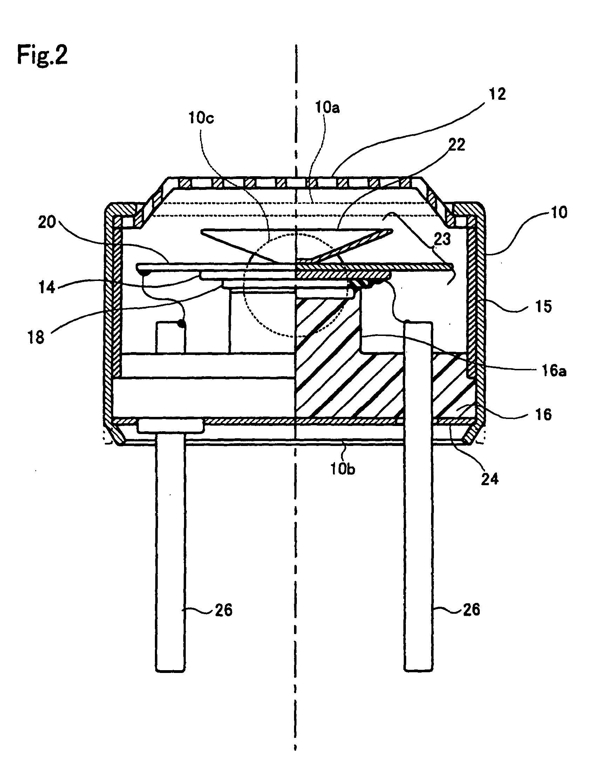

Embodiments of the present invention will be described below with reference to the drawings. Figures 1 and 2 show an embodiment of an aerial ultrasonic sensor according to the present invention.

In these drawings, reference numeral 10 denotes a cylindrical metallic outer case a tip portion of which is open and constitutes a sound emitting port 10a. An inner case 15 is fittingly inserted into the outer case 10, and a tip portion of the inner case 15 supports a mesh-shaped window 12 constituting a porous portion covering the sound emitting port 10a. A vibrating section 23 including a piezoelectric ceramic 14 as a vibrator is arranged in the outer case 10. That is, the back surface of the piezoelectric ceramic 14 is elastically stuck, with an adhesive 18, to a projecting tip edge of a boss portion 16a provided on a base 16 positioned by a rear end of the inner case 15. A metallic plate 20 constituting a diaphragm is secured to the piezoelectric ceramic 14 ,and a cone-shaped resonator 22 is secured to the metallic plate 20. The piezoelectric ceramic 14, the metallic plate 20, and the cone-shaped resonator 22 constitute the vibrating section 23. A bottom plate 24 is fixed to a rear end opening 10b of the outer case 10 by caulking the edge of the rear end of the outer case 10 in an inwardly radial direction, thereby sealing the rear end opening 10b of the outer case 10.

A pair of electrode leads 26, 26 are fixed to the base 16 so as to penetrate the bottom plate 24. One of the electrode leads 26 is connected to a back surface of the piezoelectric ceramic 14 via a lead, whereas the other of the electrode leads 26 is connected to the metallic plate 20 via a lead.

The outer case 10 has a through-hole 10c formed in a side surface thereof, that is, so as to extend in perpendicular to the sound emitting port 10a, thus allowing an interior of the case to be in communication with an exterior thereof.

The vibrating section 23 used in this aerial ultrasonic sensor and including the vibrator 14 is designed to have desired frequency characteristics depending on the usage of the sensor. For example, the frequency characteristic of the vibrating section may have a single peak in order to use with the single frequency or a plurality of peaks in order to use with the plurality of frequencies.

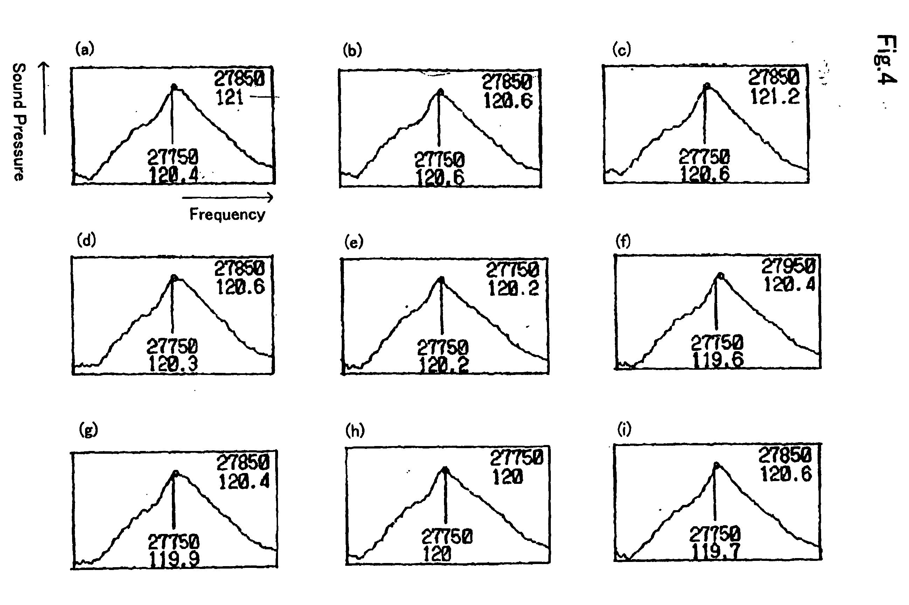

The aerial ultrasonic sensor constructed as described above is used outdoors so that the through-hole 10c is located the lowest and that the sound emitting port 10a faces in a sound emitting direction, as shown in Figure 3. If this aerial ultrasonic sensor is to be tightly held by a holder, the holder must similarly have a through-hole formed at a position thereof aligning with the through-hole.

And, ultrasonic waves are radiated by applying a voltage to between the pair of electrode leads 26 and 26 to drive the vibrating section 23, and/or ultrasonic waves are received by detecting the voltage generated between the electrode leads 26 and 26. An example of the usage of such aerial ultrasonic sensors is that they are attached to, for example, a heavy machine and workers in an outdoor work site so that the aerial ultrasonic sensor on the heavy machine radiates an ultrasonic wave, a worker's aerial ultrasonic sensor receives the ultrasonic wave from the heavy machine and radiates an ultrasonic wave of a different frequency, and the same aerial ultrasonic sensor as described above or a different aerial ultrasonic sensor on the heavy machine receives the ultrasonic wave from the worker to detect the presence of the worker within a monitoring area of the heavy machine. Of course, the present invention is not limited to this usage, but may be used to detect an arbitrary object or a distance.

In outdoor use, since the tip portion of the outer case 10 is not closed but is simply provided with the mesh-shaped window 12, the outer case 10 cannot be protected from infiltration of rainwater. The outer case 10, however, is provided with the through-hole 10c and the sensor is arranged with the through-hole facing downward, infiltrating water is discharged from the through-hole 10c, as shown in Figure 3.

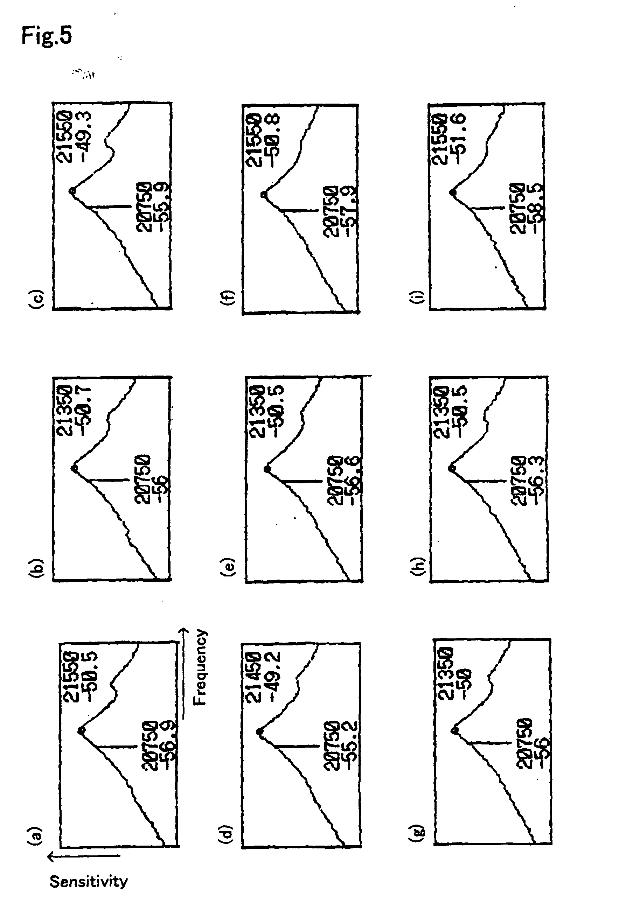

Since the outer case 10 is generally considered to be a component for radiating ultrasonic waves frontward effectively, a drilling of the through-hole 10c in the outer case 10 may be expected to significantly affect the performance of the sensor. Thus, samples with the through-hole in the outer case were compared with those without it for performance. Figures 4(a) to 4(c) and 5(a) to 5(c) show the results of measurements of the frequency characteristic of the sound pressure and sensitivity for the three samples, which do not have the through-hole, Figures 4(d) to 4(f) and 5(d) to 5(f) show the results of measurements of the frequency characteristic of the sound pressure and sensitivity for the three samples, which have the through-hole formed therein, and Figures 4(g) to 4(i) and 5(g) to 5(i) show the results of measurements of the frequency characteristic of the sound pressure and sensitivity in the case where the through-hole is closed with a tape. In the figures, the characteristics remain substantially the same regardless of the presence of the through-hole.

As apparent from the above description, the performance is not substantially affected by the presence of the through-hole 10c. Accordingly, when the sensor is used outdoors and if rainwater infiltrates into the outer case 10, the performance of the sensor is affected if the vibrating section 23 is wet, but since most of the water is discharged from the through-hole 10c, the sensor can provide its original performance once the vibrating section 23 dries. Since no rainwater stays in the outer case 10, the vibrating section dries quickly to enable measurements. With the conventional drip-proof aerial ultrasonic sensor as shown in Figure 7, although the outer case 40 is protected from infiltration of rainwater, the performance is degraded when waterdrops adhere to a front surface of the diaphragm 40a. With the aerial ultrasonic sensor of this embodiment, however, the mere adhesion of waterdrops to the mesh-shaped window 12 does not affect the internal vibrating section 23 including the vibrator 14, thus enabling measurements to be continued. Rather, the mesh-shaped window 12 serves to provide a structure that hinders waterdrops from adhering directly to the internal vibrating section 23 including the vibrator 14.

Further, the results of dust tests indicate that neither rainwater or dust substantially changes the performance of the sensor. It is assumed that dust does not substantially affect the vibrating section 23 including the vibrator 14 due to its small mass.

Furthermore, even if the sensor is washed in highpressure water, it provides substantially the same performance after drying, and an excess of water is discharged from the through-hole 10c, thus reducing the amount of time required before the vibrating section dries.

The above construction provides an aerial ultrasonic sensor that is protected from waterdrops and that allows the frequency characteristics or the like to be designed freely.

In the above description, the outer case 10 has the one through-hole 10c, but the present invention is not limited to this. As shown in Figure 6, an outer case 10' may have a plurality of through-holes 10c', 10c', or an outer case 10' may be formed of a resin and a porous portion 12' inlegratedly formed with the outer case 10' may be provided at a sound emitting port 10a' at one end of the outer case 10'.

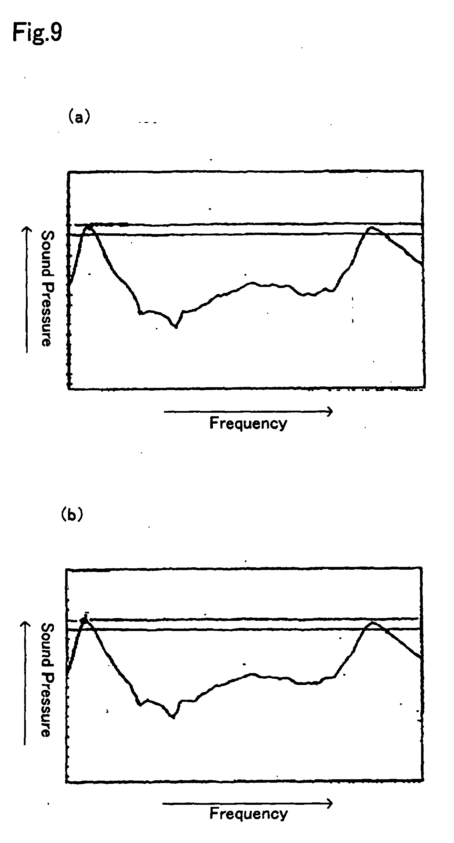

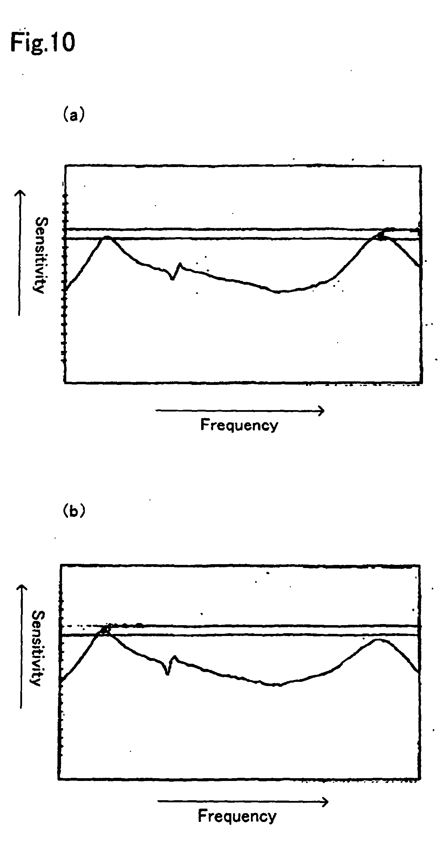

Further, as shown in Figure 8, an outer case 10" may have a through-hole 24a" formed in a bottom portion 24" at an rear end thereof. In this case, the through-hole 24a" is in communication with the sound emitting port inside the case; the sensor is used so that the through-hole 24a" faces downward. Reference numerals 26", 26" denote electrode leads. Figures 9 and 10 show the results of measurements of the sound pressure and sensitivity in the case where the through-hole 24a" is formed in the bottom portion 24" (Figures 9(a) and 10(a)) and in the case where the through-hole 24a" is not formed in the bottom portion 24" (Figures 9(b) and 10(b)). In the figures, the characteristics remain substantially the same regardless of the presence of the through-hole. In this manner, the through hole may be formed only in the bottom portion or in both the side surface and bottom portion of the outer case. In either case, the size of the through-hole does not substantially affect the performance of the sensor.

### INDUSTRIAL APPLICABILITY

As described above, according to the present invention, the through-hole is formed in the side surface or bottom portion of the outer case, so that rainwater infiltrating into the outer case flows out from the through-hole and does not stay in the outer case. Even if the vibrator wets, the vibrator dries quickly and after the drying, the sensor can be used as it was before. Further, the vibrating section including the vibrator is arranged in the outer case, thereby allowing the frequency characteristics or the like to be designed more freely.

Moreover, according to the aspect of the present invention as set forth in claim 2, waterdrops may adhere to the porous portion but are prevented from contacting directly with the vibrating section including the vibrator, thus making it possible to reduce the adverse effects of the adhering waterdrops.

## Claims

1. An aerial ultrasonic sensor, comprising:
a cylindrical outer case one end of which is not closed but constitutes a sound emitting port;
a bottom portion formed opposite to the one end of the outer case; and
a vibrating section arranged in the outer case and including a vibrator,
in which the sensor radiates ultrasonic waves from said sound emitting port through the air and/or receives ultrasonic waves through the air,
**characterized in that** a draining through-hole is formed in a side surface of the outer case and/or the bottom portion.

2. The aerial ultrasonic sensor according to claim 1, **characterized in that** the sound emitting port of said outer case is porous.
